# EUROPEAN PATENT APPLICATION

(11) **EP 0 567 303 A1**
(43) Date of publication of application: **27.10.1993**
(21) Application number: 93303070.2
(22) Date of filing: 20.04.1993
(51) Int. Cl.: B60R 22/46

(54) **Safety restraint pretensioning**

(30) Priority: 23.04.1992 GB 9208757
(71) Applicant: ALLIEDSIGNAL LIMITED, Kingswood, Bristol BS15 2NL (GB)
(72) Inventor: Foster, Howard James, Carlisle, Cumbria CA1 2PF (GB)
(74) Representative: Turner, Alan Reginald

(57) **Abstract**

. In a vehicle safety belt system the safety belt is provided with an inertial sensitive pretensioning device with a single locking mechanism which normally holds a spring in a compressed dormant state, the locking mechanism being responsive to vehicle deceleration to release the locking and allow the spring to apply tension to the seat belt whilst moving along a ratchet (7) to reach a point where it relocks to isolate spring from subsequent belt tension due to the inertia of an occupant. The locking mechanism comprises a carrier (15) slideable on the longitudinal ratchet member (7), said carrier being connected to the safety belt tensioning part and also having a moveable abutting part (35) which is normally latched against an abutment (16a) of said ratchet member (7) but which on release is thereafter movable along said ratched member (7) in the manner of a pawl to effect said locking in opposite direction.

## Description

This invention relates to safety restraint pretensioning and relates more particularly to a pretensioning device for a passenger safety restraint for a road vehicle.

Vehicle passengers safety restraints most commonly comprise a safety belt which comprises an anchorage or automatic locking webbing retractor on one side of the respective seat from which webbing passes via a shoulder-height fitting and diagonally across the occupant to a buckling tongue which is engageable with a buckle anchorage at the other side of the seat. Usually such webbing returns from the buckling tongue as a lap webbing to a floor anchorage on the first side of the seat. Although such a restraint is usually self-tightening by virtue of a retractor and the retractor locks in the event of specified lower webbing-sensing or vehicle-sensing 'g' values, it is desirable to provide separate means for independently tightening the webbing to limit the movement of an occupant in impending crash conditions and for this purpose it has been proposed to provide a pretensioning device in the buckle anchorage.

In the Specification of European Patent Application No. 0 398 010 there is described a pretensioning device for a safety restraint in which a relatively heavy compressed spring is retained compressed in a tubular Rousing by means of a latching mechanism. The latching mechanism is releasable when a certain level of deceleration is experienced by an inertial mass of certain of the components and thereafter the force of the spring is permitted to tighten the safety restraint. The eventual force exerted by an occupant on the safety restraint is then contained by further locking means in the form of an elliptical member which locks in an internal locking tube located within the compression spring.

The object of the present invention is to provide a pretensioning device which is safe to assemble and easy to install on a vehicle and avoids the need for an inner locking tube.

According to the present invention there is provided a safety restraint pretensioning device comprising a tubular housing 1 within which a relatively heavy spring (9) is normally retained in a compressed condition by a latching mechanism, said latching mechanism being releasable in response to predetermined conditions of deceleration to apply the force of the spring to a tensionimg part 41 and said device including locking means operable to effect locking transfer subsequent forces exerted by said tensioning part to the housing characterised in that said locking means comprises a longitudinal ratchet member (7) and a carrier slideable thereon, said slider (15) being connected to said tensioning part and also having a movable abutting part (35) which is normally engageable with an abutment of said ratchet member but which on release is thereafter movable along said ratchet member (7) in the mannerofa pawl to effect said locking.

In order that the invention may be more clearly understood and readily carried into effect the same will be further described by way of example with reference to the accompanying drawings of which;
Fig. 1, illustrates in schematic manner a pretensioning device according to the invention.
Fig. 2, illustrates on enlarged scale a latching mechanism used in the device of Fig. 1 and
Figs. 3 and 4 illustrate successive stages of the operation of the latching mechanism.

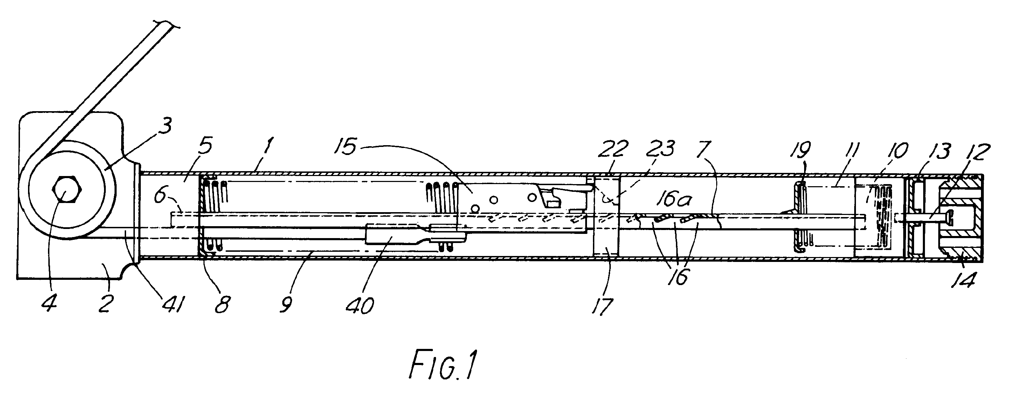

Referring to Fig. 1 the pretensioning device has a main body or housing comprising a tube 1 of metal or plastic fitted at one end with an end-frame member 2 carrying a pulley 3 on a fixing bolt 4. The tube 1 is attached to the end-frame 2 by means of an end support portion 5. The support portion 5 is provided with an axial recess 6 to receive the left hand end of a U-section longitudinal ratchet bar member 7 to which is welded a cup-shaped end piece 8 which retains one end of a relatively heavy compression spring 9, all being within the tube 1. The right hand end of the spring 9 is retained against a latchable carrier frame 15 which when released is movable along the bar member 7. The bar member extends towards the right hand end of the tube to carry near this end a further cup-shaped end piece 19 between which and an adjustable end support 10 a relatively lighter calibration spring 11 is retained as shown. End-support 10 is adjustable by means of an axial screw 12, carried by a fixed end piece 13 concealed beneath a plastic end cover 14.

Over an operative range of movement of that latchable carrier 15, the ratchet bar member 7 is perforated to provide a succession of abutments 16 which are engageable by a latching member to prevent any leftward movement along the bar member 7 over more than the distance between one such abutment and the next. However the trailing edges of the perforations are formed with ramps 16a which permit unimpaired rightward movement of the carrier 15 once it is released by engagement with a tripping ramp member 17 within the tube.

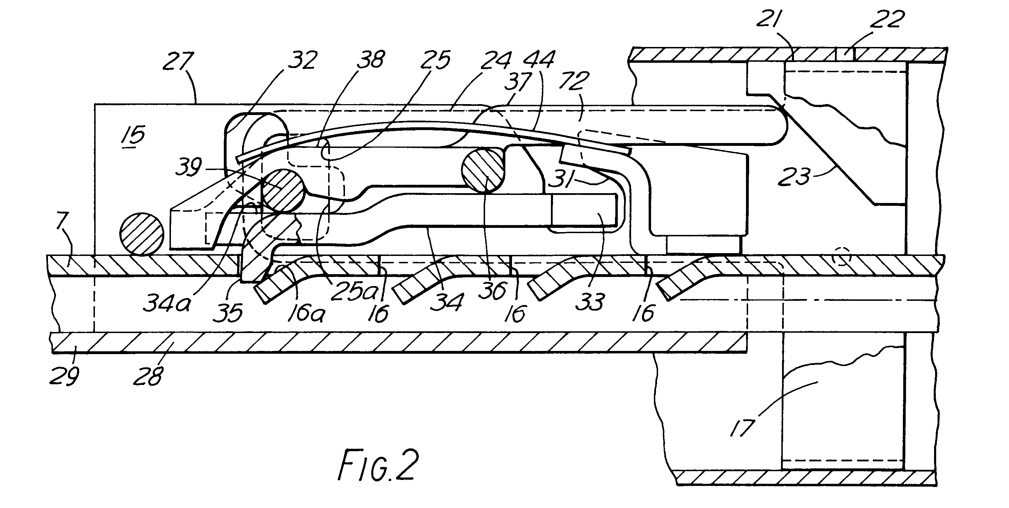

The construction and operation of the carrier 15 and the tripping ramp 17 may be considered with reference to Fig. 2 which provides an enlarged fragmentary view. Firstly, the tripping ramp 17 has substantially cylindrical periphery 21 with three small shearable projections such as 22 which locate in corresponding apertures axially approximately midway along tube 1. In addition, the tripping ramp 17 has a ramp surface 23 facing towards the carrier and also a pair of planar side arms such as 24, which extend along outside of respective side portions 27 of the carrier frame 15 and have rectangular windows 25 which surround projecting ends 26 of a transverse lock-bar 39 to be referred to further below.

The carrier 15 is of generally U-shaped section with a base part 28 and the mentioned side portions 27 passing either side of the bar member 7. The base part 28 is substantially parallel to the bar member 7 and has a projection 29 for connection to a buckle via a double cable crimp 40 for a cable 41 (Fig. 1). The cable 41 passes around the pulley 3 to a buckle not shown. The side-portions 27 are formed with shaped cut-outs 31 and 32. Cut-outs 31 are shaped to receive respective side ears 33 at the right hand end of a latching plate 34 shaped to present a downward pointing latching abutment 35 at the other end. This latching abutment 35 is latchingly engageable with a succession of abutments 18 of the ratchet bar and is only slidingly engageable with the successive opposingly faced ramps 16a. Pivotally carried at 38 upon the upward face of the latching plate there is a rocker member 37 having one arm 38 shaped to locate the above mentioned transverse locking bar 39 and another rightwardly projecting arm 42 spaced only within a short distance of engagement with the ramp surface 23. The above-mentioned cut-outs 32 are generally L-shaped and cooperate with the arm 38 and windows 32 to locate the locking bar 39 in a locking position relative to 34. With the rocker 38 raised, the locking bar 39 is able to be moved within the window 25a along the upper surface 34a of latch plate 34. The rocker member 37 is urged by a leaf spring 44 shown in Fig. 2 by broken lines, towards the latch plate 34 to ensure latching with the ratchet bar.

Considering now the operation, with reference first to Fig. 1, the pretensioning device is mounted at its left hand end by means of the bolt 4 which conveniently also carries the cable pulley 3, and at its right hand end by means not shown. The device is aligned with the normal forward direction of motion being left to right as shown in the drawing. In the event of rightward deceleration of the device shown in Fig. 1, the movable mechanism housed within the tube 1, namely the ratchet bar, the latchable carrier 15, end member 8 and 9 and spring 9 and 11, are inertially moved rightwards, compressing spring 11 against end support 10. Such movement therefore causes engagement of rocker arm 42 with ramp surface 23 which is initially fixedly located within the tube shearable projections 22.

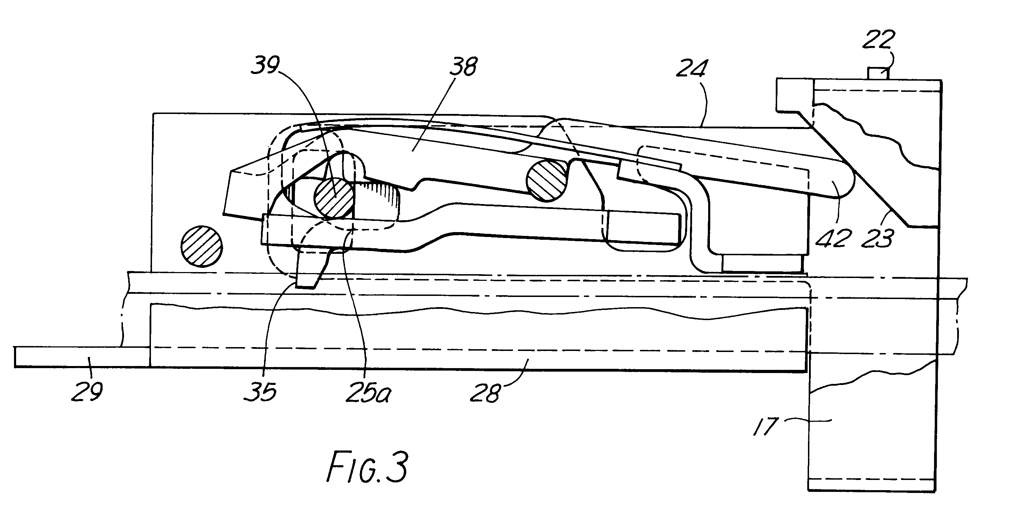

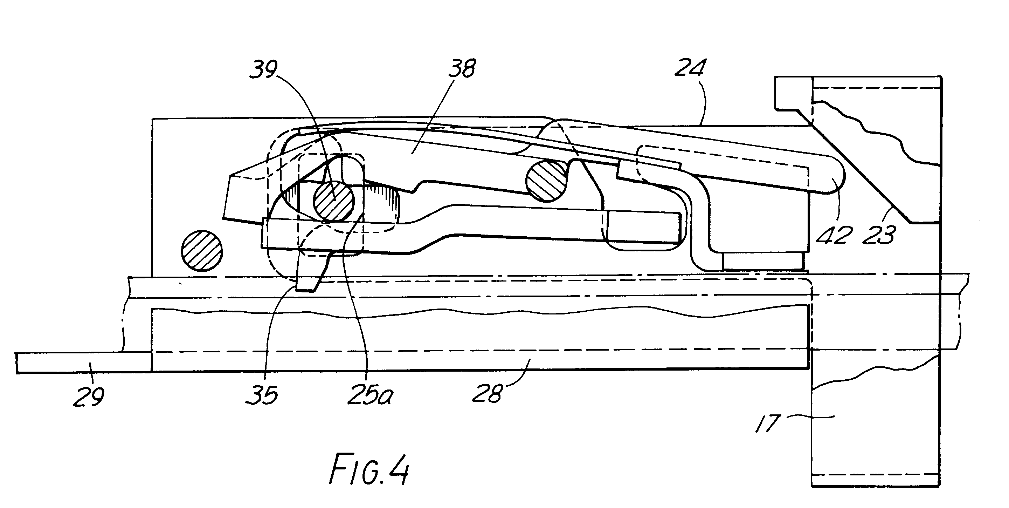

Referring now to Fig. 1, in the condition shown, the latching abutment 35 rests solidly against a first of ramps 16a of the ratchet bar 7 and is unable to ride up it underthe influence of compressed spring 9. This is by virtue of the locking action of the transverse lock bar 39 resting between the upper surface of plate 34 and respective edges of the shaped apertures 32 of the frame. Leftward movement towards the higher part of such apertures is therefore prevented by the engaging profile of the rocker arm 38 with 39. However, engagement of the arm 42 with ramp surface 23 results in downward movement of 42 and upward movement of 38 against spring 44 to free locking bar 39 for leftward movement. Such leftward movement is effected by the immediately following engagement with 39 by the edges 25a of the above mentioned windows 25 of arms 37 carried by the still-fixed ramp member 17. This causes the ends of the bar 39 to move into the higher part of the respective L-shaped cut-outs 32 of the frame 27, thereby permitting the latch plate 34 and projection 35 to pivotally lift as shown in Fig. 3. The carrier 15 is then able to travel rapidly rightwards along bar 7, the projection 35 riding over successive ramps 16b until the force of spring 9 is transferred to the buckle cable 41. Projection 35 then engages the nearest leftwards abutment 16 so that subsequent increase of the tension in the buckle cable is transferred via the carrier 15, projection 35 and the respective abutments of the ratchet bar 7 to the end support 5. The approach to such locking condition is shown in Fig. 4. The rapid rightward movement of carrier 24 is effected by the force of relatively heavy compression spring 9, the impact on the member 21 by carrier 24 being such as to fracture the detents 22 whereby 17 is carried along the tube 1 with the latchable carrier 15. The carrier either reaches its full extent along the tube or is arrested by tension in cable 14. Subsequent cable tension then tends to return the carrier 15 leftwards along the bar 7 but such movement is inhibited by engagement of abutment of 35 with one of the abutments 16 of the bar 7. Such abutment is assisted by the fact that the outer end 38a of the rocker arm has an inertial mass which always lies between the pivot point 36 and the base 28 of the frame. Rightward deceleration therefore tends to tilt 38 towards locking engagement with the transverse locking bar 39.

In an alternative embodiment of a pretensioning device according to the present invention, it may be arranged that the ratchet member 7 does not move within the tube. In that case a separately movable inertial mass may be located within the tube. This separately movable mass can be normally located in a position in which it retains the member 38 in a locking position in relation to the ratchet member. Again the separately movable mass may be normally positioned by a relatively light spring which permits movement when predetermined deceleration conditions are experienced. Additionally or alternatively the separately movable mass may movably engage a transverse locking element such as 39 to move it away from its locking position in relation to the member which carries the locking abutment 35.

## Claims

1. A safety restraint pretensioning device comprising a tubular housing 1 within which a relatively heavy spring (9) is normally retained in a compressed condition by a latching mechanism, said latching mechanism being releasable in response to predetermined conditions of deceleration to apply the force of the spring to a tensioning part 41 and said device including locking means operable to effect locking transfer subsequent forces exerted by said tensioning part to the housing characterised in that said locking means comprises a longitudinal ratchet member (7) and a carrier slideable thereon, said slider (15) being connected to said tensioning part and also having a movable abutting part (35) which is normally engageable with an abutment of said ratchet member but which on release is thereafter movable along said ratchet member in the manner of a pawl to effect said locking.

2. A safety restraint pretensioning device as claimed in claim 1, characterised in that said carriage comprises two side portions 27 and said abutting part (37) being part of a tilting member 38 supported between said side portions.

3. A safety restraint pretensioning device as claimed in claim 2, characterised in that said side portions 27 each have a shaped aperture which serves to locate a transverse locking element 39 in relation to said tilting member such that in a locking position of said element said abutment is locked into abutting relationship with said ratchet member (7) and in a non-locking position of said element said abutment is able to slide along said ratchet member under the force of said spring.

4. A safety restraint pretensioning device as claimed in claim 3, characterised in that said ratchet member and said carrier are axially movable together within said tubular housing against a relatively lighter spring (11), movement against said lighter spring being in a sense to release said locking element.

5. A safety restraint pretensioning device as claimed in claim 4 characterised by a tripping member (17) located within the tube 1, said tripping member having windows 25 within which said transverse element 39 is constrained.

6. A safety restraint pretensioning device as claimed in claim 4 or 5 characterised by a tripping member (17) located within the tube said tripping member having a cam surface cooperable with said abutting part in response to said predetermined condition of deceleration.

7. A safety restraint pretensioning device as claimed in claim 1, 2 or 3, characterised in that said ratchet member 7 is fixed in said tubular housing 1 and a separately movable inertial mass is provided movement of which against a relatively lighter spring is effective to permit release of the latching mechanism.
